# FASCICULE DE BREVET EUROPEEN

(11) **EP 3 968 482 B1**
(45) Date de publication et mention de la délivrance du brevet: **28.09.2022**
(21) Numéro de dépôt: 21179283.3
(22) Date de dépôt: 14.06.2021
(51) Int. Cl.: H02J 3/14, H02J 13/00

(54) **PROCÉDÉ ET VÉHICULE MUNI D'UN SYSTÈME DE DÉLESTAGE COMPRENANT AU MOINS UN DÉTECTEUR DE FUMÉE**
VERFAHREN UND FAHRZEUG MIT EINEM LASTABWURFSYSTEM, DAS MINDESTENS EINEN RAUCHMELDER UMFASST
METHOD AND VEHICLE PROVIDED WITH A LOAD-SHEDDING SYSTEM COMPRISING AT LEAST ONE SMOKE DETECTOR

(30) Priorité: 15.09.2020 FR 2009346
(43) Date de publication de la demande: 16.03.2022
(73) Titulaire: Airbus Helicopters, 13725 Marignane Cedex (FR); Airbus Helicopters Polska, 90-330 Lódz (PL)
(72) Inventeur: MOLINSKI, Jakub, 86152 Augsburg (DE); ABDELLI, Kamel, 13011 Marseille (FR)
(74) Mandataire: GPI Brevets

(56) Documents cités:
- EP-A1- 2 393 072
- EP-A2- 3 170 160
- WO-A1-2015/172857
- WO-A1-2019/055708
- FR-A1- 3 038 274
- US-B2- 9 472 079

## Description

La présente invention concerne un véhicule muni d'un système de délestage comprenant au moins un détecteur de fumée et le procédé appliqué.

Un aéronef comporte usuellement un réseau électrique. Un tel réseau électrique comporte un ou plusieurs générateurs électriques tels qu'une batterie électrique, une pile, un alternateur... De plus, le réseau électrique comporte des consommateurs d'énergie électrique dénommés plus simplement « charges électriques » ou encore « electrical loads » en langue anglaise. Chaque charge électrique est reliée électriquement à une ligne électrique qui est connectée à une barre d'alimentation électrique. Chaque barre d'alimentation électrique est elle-même reliée électriquement à au moins un générateur électrique par une liaison électrique dénommée parfois « feeder » en langue anglaise.

En outre, le réseau électrique peut comprendre des protections électriques. Une protection électrique peut prendre la forme d'un premier composant dénommé « circuit breaker » en langue anglaise. Le premier composant est un disjoncteur thermiquemagnétique apte à ouvrir une ligne électrique pour interrompre la circulation d'un courant électrique important.

Une protection électrique peut prendre la forme d'un deuxième composant dénommé « remote control circuit breaker » en langue anglaise dont l'ouverture et la fermeture peuvent être commandées électriquement.

Une protection électrique peut prendre la forme d'un troisième composant dénommé « solid state power contrôler » en langue anglaise qui est un disjoncteur électronique commandable à distance.

Le deuxième composant et le troisième composant peuvent fournir des informations diverses. Le deuxième composant et le troisième composant peuvent notamment mesurer la tension électrique, l'intensité du courant électrique et/ou la résistance électrique dans une ligne électrique, voire peuvent mesurer l'isolation électrique de la ligne électrique par une technique de réflectométrie.

Un réseau électrique est susceptible d'être à l'origine d'une combustion induisant de la fumée et potentiellement un feu au sein de l'aéronef. La fumée peut être détectée visuellement par des occupants de l'aéronef, et par exemple par le personnel navigant ou des passagers. Lorsqu'une fumée est détectée, le personnel navigant exécute une procédure prédéterminée.

Une telle procédure peut comprendre une étape d'identification de la zone de l'aéronef à l'origine de la fumée et une étape de délestage manuel. Toutefois, la détection de la source de la fumée et encore plus de la ligne électrique défectueuse est de fait difficile. Par exemple, une procédure peut prévoir de délester plusieurs barres d'alimentation électrique. Si la fumée disparait, la procédure peut prévoir de rebrancher les barres d'alimentation électrique une par une pour identifier la barre d'alimentation électrique alimentant électriquement un équipement défectueux.

Le terme « délester » fait référence à la coupure volontaire de l'alimentation électrique d'un consommateur électrique.

Lors de l'application de cette procédure, le personnel navigant peut être distrait et peut temporairement avoir une attention réduite sur les autres tâches à accomplir. De plus, le délestage d'une barre d'alimentation complète entraîne la mise à l'arrêt d'une pluralité de lignes électriques et de charges électriques alors que seule une ligne électrique pose éventuellement problème. En fonction de la barre d'alimentation délestée, de nombreuses charges électriques peuvent être rendues inopérantes. En outre, cette procédure peut mettre fin à la mission en cours.

Par ailleurs, une telle détection visuelle peut s'avérer longue ce qui peut induire des dommages plus importants, voire un départ de feu.

Des aéronefs peuvent ainsi comprendre des détecteurs de fumée.

Le document WO 2015/172857 décrit un aéronef pouvant comprendre des détecteurs de fumée.

Cet aéronef comporte par ailleurs des modules de distribution de données et d'énergie électrique. Un tel module comporte une pluralité d'interfaces électriques d'entrée à connecter électriquement à des lignes d'alimentation électrique et une pluralité d'interfaces électriques de sortie à connecter électriquement à des charges électriques. Ces interfaces électriques d'entrée sont reliées à une unité centrale de contrôle de charges électriques. Cette unité centrale de contrôle de charges électriques reçoit des premières données de délestage via une ou plusieurs lignes d'alimentation électrique et des deuxièmes données de délestage redondantes via un bus de données. Cette unité centrale de contrôle de charges électriques est configurée pour délester une ou plusieurs charges électriques en fonction des premières données de délestage et des deuxièmes données de délestage.

Le document US 9 472 079 décrit un procédé comprenant l'installation d'un ou plusieurs ensembles détecteur de fumée à sensibilité sélectionnable couplés à une ou plusieurs commandes de sélection de sensibilité. Un niveau de sensibilité de point de consigne d'alarme est sélectionné parmi au moins deux niveaux de sensibilité de point de consigne d'alarme pour chacun du ou des ensembles détecteur de fumée à sensibilité sélectionnable.

Les documents FR 3 038 274, EP 2 393 072, WO 2019/055708 et EP 3 170 160 sont aussi connus.

La présente invention a alors pour objet de proposer un procédé d'assistance innovant afin de délester rapidement une ligne électrique à l'origine d'un feu.

L'invention vise ainsi un procédé d'assistance pour assister un équipage en présence de fumée dans un véhicule, le véhicule comportant un réseau électrique muni d'une pluralité de branches électriques, chaque branche électrique comprenant une ligne électrique alimentant électriquement au moins une charge électrique.

Un tel véhicule peut être un aéronef et par exemple un aéronef à voilure tournante, voire un hélicoptère, un véhicule maritime ou encore routier.

Le terme « équipage » peut englober une ou plusieurs personnes présentes dans le véhicule.

Le procédé comporte les étapes suivantes :
- détection de fumée dans une zone du véhicule avec un détecteur de fumée,
- transmission d'un signal de détection de fumée du détecteur de fumée vers un calculateur d'analyse,
- identification avec le calculateur d'analyse d'au moins une branche électrique défectueuse présente dans ladite zone parmi ladite pluralité de branches électriques,
- affichage sur un afficheur d'une proposition, à un équipage du véhicule et en présence de fumée dans ladite zone, de délestage de ladite au moins une branche électrique défectueuse au moins lorsque ladite au moins une branche électrique défectueuse comporte une charge électrique essentielle pour la réalisation d'une mission courante du véhicule, et délestage automatique par une protection électrique de ladite branche électrique défectueuse comportant une charge électrique essentielle sur condition d'acceptation par ledit équipage à l'aide d'une interface homme-machine.

L'expression « délestage automatique » signifie que le délestage est réalisé via un signal transmis à la protection thermique par un organe du véhicule, et non pas par un équipage qui manœuvre un objet.

Par exemple, chaque branche électrique surveillée par ce procédé comporte sa propre protection électrique commandable à distance. Par exemple, chaque protection électrique est du type « remote control circuit breaker » ou « solid state power controler ». Chaque protection électrique peut être commandée, éventuellement par le calculateur d'analyse lui-même ou par un autre calculateur, par exemple par un signal analogique ou numérique ou optique transmis par une liaison usuelle, telle que par exemple une liaison connue sous les expressions ARINC429, CAN bus, ou encore Ethernet.

Ce procédé prévoit donc l'agencement d'au moins un détecteur de fumée usuel, et par exemple de plusieurs détecteurs de fumée couvrant des zones distinctes du véhicule. Sur un aéronef, plusieurs détecteurs de fumée sont éventuellement positionnés dans des zones comprenant de nombreuses charges électriques destinées à la réalisation de la mission courante, par exemple dans une baie avionique disposée dans un nez de l'aéronef, dans une zone de cargo, ou encore dans des zones contenant de nombreux faisceaux électriques.

Ce procédé permet donc d'identifier la présence d'une fumée rapidement à l'aide d'un détecteur de fumée usuel. Dès lors, le détecteur de fumée en informe un calculateur d'analyse. Suite à la réception d'un signal de détection, ce calculateur d'analyse est notamment configuré pour identifier une ou plusieurs branches électriques défectueuses possiblement à l'origine de la fumée. En particulier, le calculateur d'analyse peut mémoriser pour chaque détecteur de fumée une liste de branches électriques susceptibles d'être incriminées. Dès lors, en présence dans une zone du véhicule d'une fumée et d'une branche électrique défectueuse comportant une charge électrique essentielle, un afficheur est alors commandé pour en informer l'équipage du véhicule et proposer à cet équipage de délester la branche électrique défectueuse concernée à l'aide de la protection électrique correspondante. Si une branche électrique défectueuse comporte aucune charge électrique essentielle alors en présence de fumée soit cette branche électrique défectueuse est automatiquement délestée soit l'accord préalable de l'équipage est aussi requis pour son délestage.

Dès lors, ce procédé permet de détecter et de localiser rapidement une fumée, d'identifier la ou les branches électriques impliquées dans la génération de cette fumée, et enfin offre la possibilité de délester uniquement cette ou ces branches électriques impliquées au lieu de délester une barre d'alimentation électrique complète.

Ce procédé permet donc éventuellement de ne délester que les charges électriques impliquées dans un feu. De plus, requérir l'accord de l'équipage avant de délester une charge électrique essentielle s'avère sécuritaire.

En effet, la connaissance de la situation vis-à-vis de ou des équipements mis en cause s'avère intéressante pour optimiser la prise de connaissance de l'information d'une part et, d'autre part, pour évaluer la part active que jouent ces équipements pour la mission. L'implication d'équipements importants pour la mission pourrait causer un atterrissage prématuré afin de sauvegarder l'aéronef et l'équipage. L'équipage peut selon l'invention être rapidement informé de la situation et peut choisir la suite à donner en connaissance de cause.

Le procédé peut de plus comporter une ou plusieurs des caractéristiques qui suivent.

Selon un aspect, suite à la transmission d'un signal de détection de fumée d'un détecteur de fumée vers le calculateur d'analyse, le procédé peut comporter une étape de transmission d'un signal d'alerte du calculateur d'analyse vers un alerteur du véhicule puis une étape d'émission d'une alerte avec ledit alerteur.

Selon cette option, lorsque le calculateur d'analyse reçoit un signal de détection de fumée, le calculateur d'analyse génère un signal d'alerte transmis directement ou via un autre équipement à un alerteur pour en informer l'équipage.

Selon un aspect, l'étape d'identification d'au moins une branche électrique défectueuse peut comporter une étape de sélection parmi lesdites branches électriques d'au moins une branche électrique suspecte présente dans ladite zone.

Une telle étape peut permettre d'effectuer un premier tri parmi toutes les branches électriques, seules les branches électriques suspectes étant par la suite traitées.

Selon un aspect, l'étape d'identification d'au moins une branche électrique défectueuse peut comporter les étapes suivantes :
- mesure d'au moins une donnée courante électrique d'au moins une branche électrique présente dans ladite zone, et le cas échéant de toutes les branches électriques présentes dans ladite zone voire de toutes les branches électriques,
- comparaison par ledit calculateur d'analyse de ladite au moins une donnée courante avec une donnée mémorisée correspondante,
- détermination qu'une branche électrique est une dite branche électrique défectueuse sous condition de la comparaison.

Ces étapes peuvent être entreprises en continu lors de l'utilisation du véhicule ou seulement suite à une détection de fumée.

Le calculateur d'analyse peut évaluer au moins pour chaque branche électrique d'une zone enfumée, voire le cas échéant pour chaque branche électrique suspecte ou chaque branche électrique, si cette branche électrique présente une ou plusieurs données courantes électriques conformes à des données mémorisées. Dans la négative, le calculateur d'analyse en déduit que la branche électrique en question est une branche électrique défectueuse.

Par exemple, le calculateur d'analyse mémorise les profils électriques de chaque branche électrique et les compare à la situation courante, par exemple au travers de bases de données ou encore d'un réseau de neurones. En présence de la détection d'un profil électrique inhabituel, le calculateur d'analyse en déduit que le branche électrique concernée est défectueuse.

Les mesures des données courantes peuvent être effectuées par les protections électriques et/ou des systèmes de surveillance complémentaires.

Eventuellement, ladite donnée courante peut être une résistance électrique ou une intensité de courant électrique ou une tension électrique ou une mesure d'isolation électrique, réalisée par exemple par une protection électrique.

Par exemple, pour chaque branche électrique surveillée des mesures de résistance électrique, de tension électrique et d'intensité du courant électrique sont réalisées et transmises au calculateur d'analyse.

Pour les branches électriques critiques et/ou à haute tension électrique ou à haute intensité de courant électrique, des mesures d'isolation électriques sont réalisées par exemple par réflectométrie, par détermination de la survenue d'un arc électrique ou autres à l'aide des protections électriques ou d'autres systèmes connus usuels.

Eventuellement, ladite comparaison d'au moins une donnée courante avec une donnée mémorisée correspondante peut comporter les sous-étapes suivantes : détermination d'un écart entre une donnée courante et une donnée mémorisée correspondante d'une branche électrique puis détermination que ledit écart est conforme à un écart mémorisé, cette branche électrique étant une dite branche électrique défectueuse lorsque ledit écart n'est pas conforme à l'écart mémorisé.

L'expression « ledit écart est conforme à un écart mémorisé » signifie que ledit écart est sensiblement égal à l'écart mémorisé. Cet écart mémorisé peut par exemple prendre la forme d'une plage de valeurs, l'écart mesuré étant conforme à l'écart mémorisé lorsque l'écart mesuré est présent dans ladite plage de valeurs.

Selon un aspect, le procédé peut comporter une étape d'identification d'un risque de délestage élevé ou faible de ladite au moins une branche électrique défectueuse, un risque de délestage faible d'une branche électrique défectueuse étant identifié lorsque cette branche électrique défectueuse ne comporte aucune charge électrique essentielle, un risque de délestage élevé d'une branche électrique défectueuse étant identifié lorsque cette branche électrique défectueuse comporte au moins une charge électrique essentielle.

Cette caractéristique peut permettre de mettre en place des stratégies différentes en fonction de la criticité d'une branche électrique défectueuse.

Selon un premier exemple, chaque branche électrique est associée à un unique niveau de risque de délestage.

Selon un deuxième exemple, chaque branche électrique est associée à un niveau de risque de délestage qui varie en fonction de la mission, le procédé prévoyant alors une étape d'identification de la mission en cours. En effet, en fonction de la mission, une charge électrique peut être essentielle ou non essentielle. A titre illustratif, une branche électrique comprenant uniquement une caméra permettant de surveiller une opération de treuillage est essentielle durant une mission de treuillage et présente un risque de délestage élevé pour cette mission de treuillage. Par contre, la caméra n'est pas sollicitée durant une mission de convoyage et la branche électrique présente donc un risque de délestage faible pour une telle mission.

Le risque de délestage peut prendre en compte la présence d'équipements redondés. Selon l'exemple précédent, si le véhicule comporte non pas une mais trois caméras par exemple, le délestage d'une branche électrique comprenant une seule caméra lors d'une opération de treuillage présente un niveau de risque faible.

Eventuellement, le procédé comporte une étape de délestage automatique sans consultation de l'équipage d'une dite branche électrique défectueuse associée à un dit risque de délestage faible.

Ainsi, si le risque de délestage d'une branche électrique défectueuse est faible, le délestage est automatiquement réalisé sans consultation de l'équipage. Par contre, si le risque de délestage d'une branche électrique défectueuse est élevé, le délestage est proposé à l'équipage.

Eventuellement, si une branche électrique défectueuse présente un risque de délestage élevé, le procédé peut comporter, préalablement à ladite étape d'affichage sur un afficheur d'une proposition, une étape d'affichage d'une alerte dans une liste d'alerte.

Selon un aspect, le procédé peut comporter une étape d'affichage d'une représentation de ladite au moins une branche électrique défectueuse sur une représentation en trois dimensions dudit véhicule.

Après la détection d'au moins une branche électrique défectueuse, cette branche électrique peut être signalée à un équipage au moyen d'une représentation graphique pour permettre à l'équipage de la visualiser aisément et rapidement.

Selon un aspect, ledit procédé peut comporter une étape d'injection d'un gaz inerte ou inhibiteur dans un tube dans lequel chemine ladite ligne électrique d'une branche électrique défectueuse.

Un câble électrique peut présenter une gaine isolante susceptible de bruler en présence d'un feu électrique. Dès lors, une telle gaine peut continuer à se consumer suite au délestage de la branche électrique.

Par conséquent, le procédé peut prévoir de disposer des lignes électriques, au moins partiellement, dans un tube dans lequel peut être injecté un gaz inerte ou inhibiteur notamment d'une combustion, à savoir un gaz susceptible de stopper une combustion. Par exemple, le procédé peut prévoir d'injecter du dioxyde de carbone dans le tube pour stopper la combustion d'une gaine. Le véhicule peut aussi comporter des extincteurs usuels.

Un tel tube peut comprendre un orifice d'injection dans lequel est injecté le gaz inerte ou inhibiteur et un orifice d'éjection par lequel le gaz inerte ou inhibiteur s'échappe du tube.

Par exemple, des lignes électriques à haute tension peuvent être installées dans un tel tube.

Outre un procédé, l'invention vise un véhicule pouvant appliquer ce procédé.

Ainsi, l'invention vise un véhicule comportant un réseau électrique muni d'une pluralité de branches électriques, chaque branche électrique comprenant une ligne électrique alimentant électriquement au moins une charge électrique.

Un tel véhicule peut être un aéronef et par exemple un aéronef à voilure tournante, voire un hélicoptère, un véhicule maritime, spatial ou routier.

Ce véhicule peut comporter au moins un détecteur de fumée agencé dans une zone du véhicule, ledit véhicule comportant un calculateur d'analyse en communication avec ledit au moins un détecteur de fumée ainsi qu'avec un afficheur et une interface homme-machine qui sont configurés pour appliquer le procédé de l'invention, ladite pluralité de branches électriques comportant une pluralité de protections électriques commandables.

Par exemple, chaque détecteur de fumée peut être d'un type connu ou encore peut combiner des techniques de détection de fumée photoélectrique et par ionisation.

Le calculateur d'analyse peut être un calculateur dédié indépendant ou peut faire partie d'un calculateur remplissant diverses fonctions. Le calculateur d'analyse peut être qualifié par commodité de « smoke box » en langue anglaise en raison de sa fonction.

Les protections électriques peuvent être regroupées au sein d'un ou plusieurs modules de délestage répartis dans le véhicule. Selon la variante, chaque protection électrique peut être à même d'effectuer des mesures de résistance électrique et/ou de tension électrique et/ou d'une intensité d'un courant électrique et/ou d'isolation électrique. Eventuellement, le véhicule peut comprendre des systèmes de mesures alternatifs pour effectuer lesdites mesures. Selon une variante, le module de délestage peut être dénommé par commodité « breaker panel » en langue anglaise et/ou peut intégrer le calculateur d'analyse.

Eventuellement, le véhicule peut comprendre un calculateur central, tel qu'un système connu sous l'acronyme « AMC » et l'expression anglaise « Aircraft Management Computers ». Le calculateur d'analyse peut selon une variante être une partie d'un tel calculateur central.

Eventuellement, le véhicule peut comprendre un afficheur multifonction tel qu'un système connu sous l'acronyme « MFD » et l'expression anglaise « mulltifunctional Display ». Un tel système peut remplir aussi bien une fonction d'alerteur qu'une fonction d'afficheur.

Eventuellement, l'interface homme-machine, peut comprendre une commande manuelle telle qu'un bouton ou une surface tactile, une commande vocale...

Selon un aspect, le véhicule peut comporter un calculateur de commande relié à ladite pluralité de protections électriques commandables et au calculateur d'analyse.

Le calculateur central évoqué précédemment peut comprendre ce calculateur de commande. Le calculateur de commande peut être dédié à cette tâche ou peut remplir d'autres tâches.

Selon un aspect, le véhicule peut comporter au moins un tube dans lequel circule au moins une dite ligne électrique, ledit tube étant relié à un système d'injection d'un gaz inerte ou inhibiteur.

L'invention et ses avantages apparaîtront avec plus de détails dans le cadre de la description qui suit avec des exemples donnés à titre illustratif en référence aux figures annexées qui représentent :
la figure 1, une vue qui illustre un véhicule selon l'invention,
la figure 2, une vue qui illustre un système de délestage ayant un calculateur d'analyse intégré à un calculateur central,
la figure 3, une vue qui illustre un système de délestage ayant un calculateur d'analyse intégré à un module de délestage,
la figure 4, une vue illustrant un tube coopérant avec un système d'extinction à un gaz inerte ou inhibiteur,
la figure 5, une vue illustrant un procédé selon l'invention, et
la figure 6, une vue illustrant une étape de représentation d'une branche électrique défectueuse.

Les éléments présents dans plusieurs figures distinctes sont affectés d'une seule et même référence.

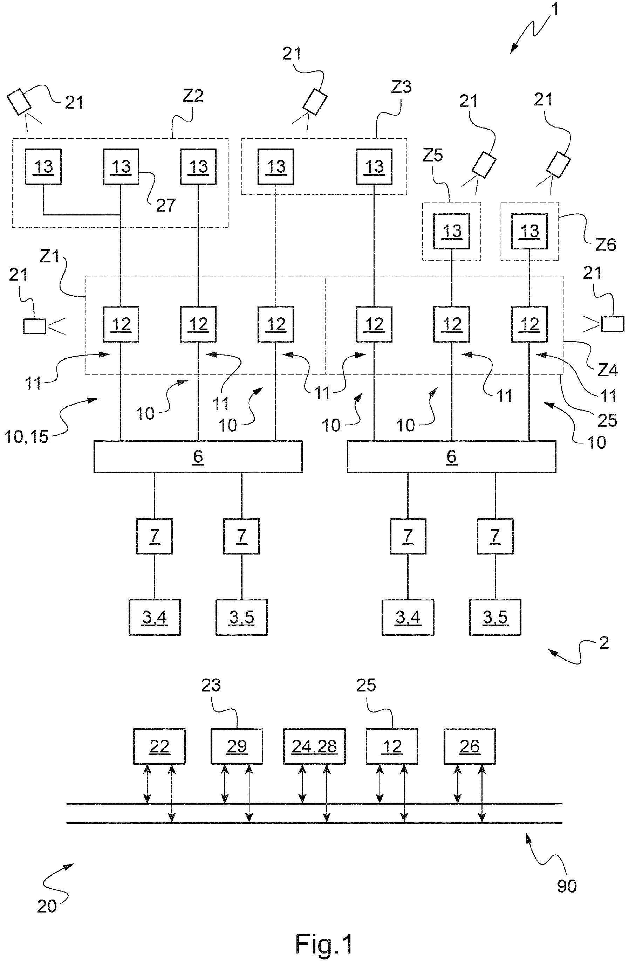

La figure 1 présente un véhicule 1 selon un exemple de l'invention donné à titre illustratif. Ce véhicule 1 possède un réseau électrique 2.

Ce réseau électrique 2 peut posséder des sources 3 d'énergie électrique. Selon l'exemple illustré, le véhicule 1 possède au moins un générateur électrique 4 et/ou au moins une batterie 5 agencés au niveau d'un côté gauche du véhicule 1 et au moins un générateur électrique 4 et/ou au moins une batterie 5 agencés au niveau d'un côté droit du véhicule 1.

Chaque source 3 d'énergie électrique alimente au moins une barre d'alimentation électrique 6, via par exemple un disjoncteur 7 ou équivalent.

Indépendamment de l'aspect génération d'énergie électrique, le réseau électrique 2 comporte une pluralité de branches électriques 10. Chaque branche électrique 10 est pourvue d'une ligne électrique 11 alimentant électriquement au moins une charge électrique 13. Chaque ligne électrique comporte un ou plusieurs fils électriques. Chaque branche électrique 10 est reliée directement ou indirectement à une barre d'alimentation électrique 6. Selon une possibilité, chaque branche électrique 10 comporte une unique charge électrique 13.

Une charge électrique 13 peut être, pour une mission particulière ou pour toutes les missions, une charge électrique essentielle 27, à savoir une charge électrique indispensable pour la réalisation de la mission. Par exemple, une pompe électrique de distribution de carburant d'un moteur thermique est une charge électrique essentielle 27 quelle que soit la mission. Selon un autre exemple, une ampoule d'une cabine de fret n'est pas une charge électrique essentielle 27 quelle que soit la mission. Selon un autre exemple, un gonfleur d'un système de flottaison est une charge électrique essentielle 27 seulement lors d'une mission maritime.

Par ailleurs, le véhicule 1 comporte un système 20 de délestage de branches électriques 10.

Ce système 20 peut comporter au moins une protection électrique 12, et par exemple au moins une protection électrique 12 par branche électrique 10 surveillée. Ainsi, chaque branche électrique 10 surveillée selon l'invention peut comprendre une protection électrique 12. Chaque protection électrique 12 peut être commandée à distance par un calculateur pour délester sur commande la branche électrique 10 concernée.

Chaque protection électrique 12 est par exemple du type « remote control circuit breaker » ou « solid state power controler ».

Les protections électriques 12 peuvent être agencées dans un ou plusieurs modules de délestage 25 au sein d'une ou plusieurs zones Z1, Z4.

Par ailleurs le système 20 comporte au moins un détecteur de fumée 21.

Chaque détecteur de fumée 21 est agencé dans une zone Z1, Z2, Z3, Z4, Z5, Z6 du véhicule 1. Chaque zone Z1, Z2, Z3, Z4, Z5, Z6 comporte au moins partiellement un élément d'une branche électrique 10 surveillée. De plus, chaque zone Z1, Z2, Z3, Z4, Z5, Z6 comporte au moins un détecteur de fumée 21 pour signaler la présence d'une fumée éventuelle dans cette zone Z1, Z2, Z3, Z4, Z5, Z6.

Par ailleurs, le système 20 comporte un calculateur d'analyse 22.

De façon générale, chaque calculateur évoqué par la suite peut comprendre par exemple au moins un processeur, au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le calculateur d'analyse 22 peut mémoriser pour chaque charge électrique 13 et/ou chaque branche électrique au moins un niveau de risque de délestage. Ce niveau de risque de délestage peut être soit élevé si la charge électrique 13 est considérée essentielle dans le cas considéré soit faible dans le cas contraire. Par exemple, pour chaque charge électrique 13 ou chaque branche électrique, le calculateur d'analyse 22 mémorise un niveau de risque de délestage par défaut et un niveau de risque de délestage par mission possible. Une branche électrique comprenant au moins une charge électrique essentielle dans une configuration a un risque de délestage élevé dans cette configuration et une branche électrique comprenant aucune charge électrique essentielle dans une configuration a un risque de délestage faible dans cette configuration.

Par ailleurs, le calculateur d'analyse 22 peut mémoriser pour chaque zone Z1, Z2, Z3, Z4, Z5, Z6 les branches électriques 10 présentes dans cette zone Z1, Z2, Z3, Z4, Z5, Z6.

Le calculateur d'analyse 22 est en communication avec chaque détecteur de fumée 21 via un réseau de communication 90 usuel. Ce réseau de communication 90 peut comprendre des moyens de transmission de données sans fil et/ou des moyens de transmission de données filaires analogiques et/ou numériques et/ou optiques.

Par ailleurs, le système 20 comporte au moins un afficheur 24 pour transmettre des informations à un équipage du véhicule 1. Par exemple, un tel afficheur 24 comporte un système multifonction connu sous l'acronyme « MFD » dans le domaine aéronautique.

Le calculateur d'analyse 22 peut être en communication avec chaque afficheur 24, directement ou indirectement, via le réseau de communication 90.

Par ailleurs, le système 20 illustré comporte au moins un alerteur 28 pour émettre une alerte. Par exemple, l'afficheur 24 peut aussi remplir ce rôle. Un système d'alarme dédié est aussi possible.

Par ailleurs, le système 20 comporte au moins une interface homme-machine 26. Par exemple, une telle interface homme-machine 26 est un bouton ou une surface tactile de l'afficheur 24, un bouton autre, une commande vocale... Le calculateur d'analyse 22 notamment peut être en communication avec chaque interface homme-machine 26 via le réseau de communication 90.

Selon un autre aspect, le système 20 peut comporter un calculateur de commande 29. Par exemple, un tel calculateur de commande 29 est une partie d'un calculateur central 23, par exemple d'un système connu sous l'acronyme « AMC » dans le domaine aéronautique.

Selon l'illustration de la figure 1, le calculateur de commande 29 peut communiquer avec le calculateur d'analyse 22 et les protections électriques 12 commandables, voire avec l'afficheur 24 et l'alerteur 28 et l'interface homme-machine 26, via le réseau de communication 90. Eventuellement, le calculateur d'analyse 22 transmet des données au calculateur de commande 29 via des signaux analogiques ou numériques ou optiques, le calculateur de commande 29 pilotant l'afficheur 24 et/ou l'alerteur et/ou au moins une protection électrique 12 en conséquence.

Alternativement, le calculateur d'analyse 22 peut piloter l'afficheur 24 et/ou l'alerteur et/ou au moins une protection électrique 12.

Selon la figure 1, le calculateur d'analyse 22, le calculateur de commande 29 et chaque module de délestage 25 sont distincts.

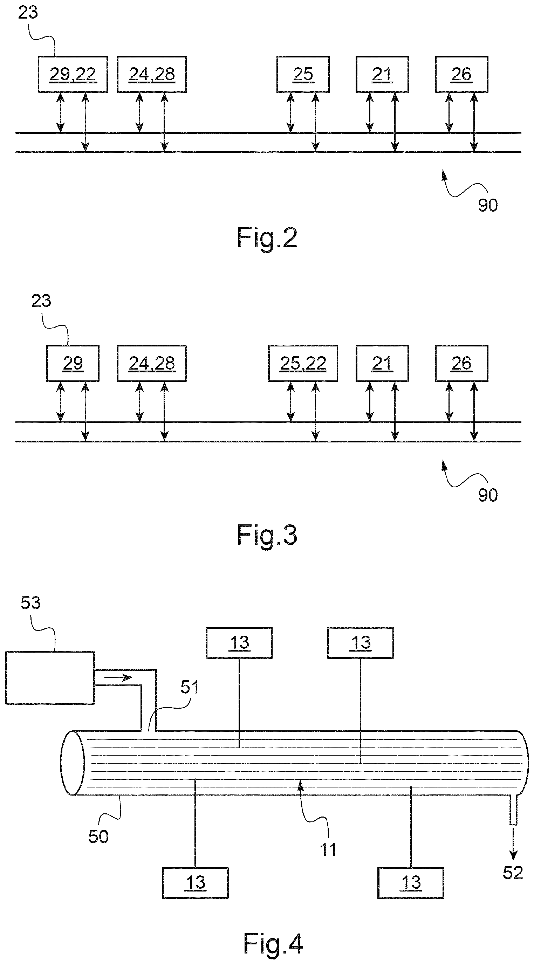

Selon l'alternative de la figure 2, le calculateur d'analyse 22 et le calculateur de commande 29 sont tous deux des parties du calculateur central 23.

Selon l'alternative de la figure 3, le calculateur d'analyse 22 est intégré à un module de délestage 25.

Ces alternatives sont données à titre d'exemple.

Par ailleurs et en référence à la figure 4, le véhicule 1 peut comporter au moins un tube 50. Une ou plusieurs lignes électriques 11 sont au moins partiellement disposées dans un tel tube 50. De plus, le tube 50 comprend un orifice d'injection 51 relié à un système 53 d'injection d'un gaz inerte ou inhibiteur et un orifice d'éjection 52 pour éjecter le gaz inerte ou inhibiteur en dehors du tube 50. Le système 53 d'injection d'un gaz inerte ou inhibiteur peut communiquer avec le calculateur de commande 29 et/ou le calculateur d'analyse 22 pour injecter si besoin le gaz inerte ou inhibiteur dans le tube 50.

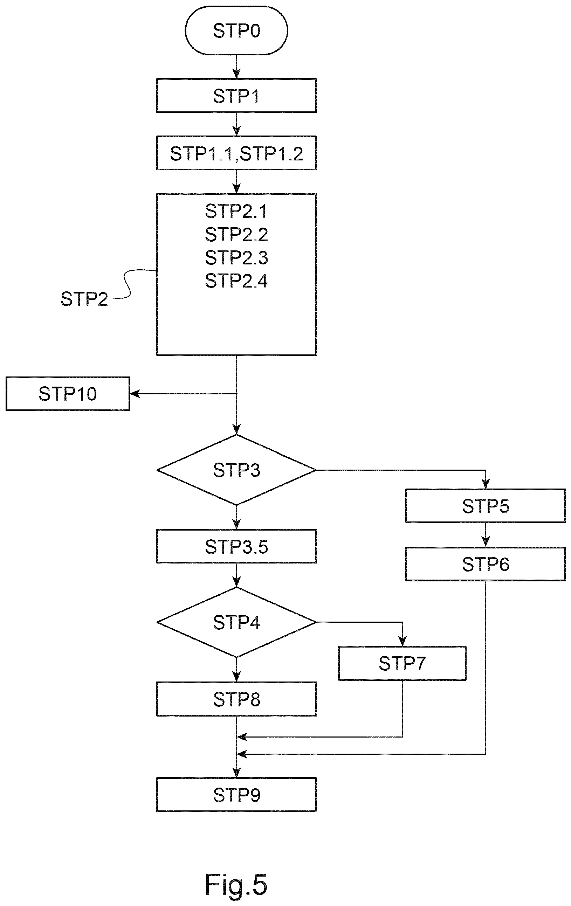

La figure 5 illustre un procédé d'assistance pour assister un équipage en présence de fumée dans un véhicule 1 comprenant une ou plusieurs des caractéristiques précédemment énoncées.

Le procédé comporte une étape de surveillance du véhicule 1 avec les détecteurs de fumée 21. Lorsque de la fumée apparait dans une zone Z1-Z6, le procédé comporte alors de fait une étape de détection de fumée STP1 dans une zone du véhicule 1 avec un détecteur de fumée 21, par exemple la zone Z2 illustrée sur la figure 1.

Pendant cette étape, le détecteur de fumée 21 concerné transmet un signal de détection de fumée analogique, numérique ou optique au calculateur d'analyse 22. Le calculateur d'analyse 22 reçoit alors ce signal de détection de fumée et est configuré pour en déduire que de la fumée est produite dans la zone en question, à savoir la zone Z2 selon l'exemple donné précédemment.

Le calculateur d'analyse 22 peut être configuré pour déterminer dans quelle zone du véhicule 1 la fumée est détectée en fonction du détecteur de fumée 21 ayant transmis le signal de détection de fumée. Par exemple, le calculateur d'analyse 22 stocke dans une mémoire une base de données indiquant la zone surveillée par chaque détecteur de fumée 21.

Durant une étape optionnelle de transmission STP1.1, le calculateur d'analyse 22 peut dans un premier temps transmettre un signal d'alerte analogique, numérique ou optique pour requérir la réalisation d'une étape STP1.2 d'émission d'une alerte avec un alerteur 28.

Par exemple, le calculateur d'analyse 22 transmet le signal d'alerte au calculateur de commande 29 qui pilote l'afficheur 24 pour que cet afficheur 24 remplisse une mission d'alerteur en plaçant une alerte dans une liste d'alerte. Selon un autre exemple, le calculateur de commande 29 pilote un système d'alarme. Selon un autre exemple, le calculateur d'analyse 22 transmet le signal d'alerte directement à l'afficheur 24 ou à un système d'alarme. Indépendamment de l'émission optionnelle d'une alerte, le procédé comporte une étape d'identification STP2 d'au moins une branche électrique dite « défectueuse 15 » présente dans la zone enfumée parmi toutes les branches électriques 10 surveillées. Cette identification est réalisée par le calculateur d'analyse 22.

A cet effet, le calculateur d'analyse 22 peut être configuré pour évaluer si les branches électriques 10 présentes dans la zone enfumée, à savoir la zone Z2 selon l'exemple donné précédemment, fonctionne selon un modèle mémorisé ou fonctionne de manière inhabituelle. Si une branche électrique 10 fonctionne de manière inhabituelle, le calculateur d'analyse 22 considère cette branche électrique 10 comme étant une branche électrique défectueuse 15. Cette analyse peut être réalisée uniquement suite à la réception d'un signal de détection de fumée ou en continu pour optimiser le temps de traitement en présence d'une fumée.

Lorsque par exemple l'évaluation n'est pas réalisée en continu, durant une étape de sélection STP2.1 optionnelle, le calculateur d'analyse 22 peut faire un tri parmi les branches électriques 10 pour sélectionner parmi toutes les branches électriques 10 uniquement la ou les branches électriques 10 présentes dans la zone enfumée, à savoir la zone Z2 selon l'exemple donné précédemment. De telles branches électriques 10 peuvent être qualifiées de « suspectes » par commodité.

Pour chaque branche électrique 10 suspecte, voire pour chaque branche électrique 10 selon la variante, le procédé peut comprendre une étape de mesure STP2.2 d'au moins une donnée courante électrique. Une donnée courante électrique peut être une résistance électrique ou une intensité de courant électrique ou une tension électrique ou une mesure d'isolation électrique. La mesure d'une donnée courante électrique peut être réalisée par un système de mesure usuel ou encore par les protections électriques 12.

Le calculateur d'analyse 22 peut alors réaliser une étape de comparaison STP2.3 durant laquelle chaque donnée courante électrique est comparée à une donnée mémorisée correspondante.

Dès lors, durant une étape de détermination STP2.4, le calculateur d'analyse 22 peut déduire qu'une branche électrique 10 particulière est une branche électrique défectueuse 15 sous condition de la comparaison.

Par exemple, le calculateur d'analyse 22 détermine un écart entre une donnée courante électrique et la donnée mémorisée correspondante d'une branche électrique 10. Ensuite, le calculateur d'analyse 22 détermine si cet écart correspond à un écart mémorisé. Par exemple, le calculateur d'analyse 22 détermine si cet écart est présent dans une plage mémorisée de valeurs. Dans la négative, cette branche électrique 10 est considérée comme étant une branche électrique défectueuse 15.

Indépendamment de la manière de déterminer si une branche électrique 10 est défectueuse, durant une étape d'identification STP3 optionnelle, le calculateur d'analyse 22 peut être configuré pour évaluer un risque de délestage élevé ou faible de chaque branche électrique défectueuse 15. Le risque de délestage est une image de la menace pesant sur le véhicule 1 en cas de délestage de la branche électrique 10 correspondante.

Ce risque de délestage peut être fixe, ou encore peut dépendre de la mission. Eventuellement, durant une étape préliminaire STP0, un équipage manœuvre une interface pour mémoriser la mission en cours. Cette interface transmet alors un signal analogique ou numérique ou optique porteur de la mission en cours au calculateur d'analyse 22. Si au moins une charge électrique 13 d'une branche électrique défectueuse 15 est une charge électrique essentielle 27 alors la branche électrique défectueuse 15 est considérée par le calculateur d'analyse 22 comme présentant un risque de délestage élevé. Dans la négative, le risque de délestage de la branche est faible. Pour évaluer le risque de délestage d'une branche électrique, le calculateur d'analyse peut être configuré pour solliciter par exemple une base de données mémorisée contenant le risque de délestage de chaque branche électrique et/ou de chaque charge électrique, éventuellement en fonction des missions.

En présence d'une fumée détectée dans une zone et d'une branche électrique défectueuse 15 ayant un risque de délestage élevé dans cette même zone, le calculateur d'analyse 22 peut être configuré pour émettre un signal d'information analogique ou numérique ou optique pour émettre une alerte au sein d'une liste d'alerte au cours d'une étape d'affichage STP3.5.

Indépendamment de la manière de déterminer si une branche électrique 10 est défectueuse, en présence d'une fumée détectée dans une zone et lorsque le calculateur d'analyse 22 a identifié chaque branche défectueuse de cette zone, une étape d'affichage STP4 et/ou une étape de délestage automatique STP5 sont par exemple réalisées.

Si une branche électrique défectueuse 15 comporte une charge électrique essentielle 27, le calculateur d'analyse 22 émet un signal de proposition analogique ou numérique ou optique durant l'étape d'affichage STP4 pour afficher sur l'afficheur 24 une proposition de délestage de cette branche électrique défectueuse 15. Selon la variante, le signal de proposition peut être transmis directement à l'afficheur 24 ou via le calculateur de commande 29 par exemple.

L'équipage manœuvre l'interface homme-machine 26 pour indiquer si la branche électrique défectueuse 15 doit être délestée ou non. L'interface homme-machine 26 émet un signal de choix porteur du choix de l'équipage. Si l'équipage choisit de délester la branche électrique concernée, le calculateur d'analyse 22 ou le calculateur de commande 29 reçoit le signal de choix et transmet un signal de commande à la protection électrique 12 de la branche électrique défectueuse 15 concernée durant une étape de coupure STP8. Dans la négative, le calculateur d'analyse 22 ou le calculateur de commande 29 reçoit le signal de choix et transmet éventuellement un signal de commande à l'alerteur 28 afin d'émettre une alerte durant une étape STP 7.

Si une branche électrique défectueuse 15 ne comporte pas une charge électrique essentielle 27, le procédé peut aussi mettre en œuvre les étapes STP4, STP7, STP8 précédentes.

Néanmoins, selon une autre variante, le procédé peut comporter une étape de délestage automatique STP5 de cette branche électrique défectueuse 15 à risque de délestage faible.

Par exemple, le calculateur d'analyse 22 ou le calculateur de commande 29 transmet un signal de commande à la protection thermique 12 de la branche électrique défectueuse 15 concernée pour effectuer le délestage requis, sans requérir l'approbation préalable de l'équipage.

Une alerte peut en outre être émise par la suite durant une étape STP6 pour signaler le délestage.

Selon un autre aspect, le procédé peut comporter une étape de mémorisation STP9 des divers événements pour permettre un traitement ultérieur.

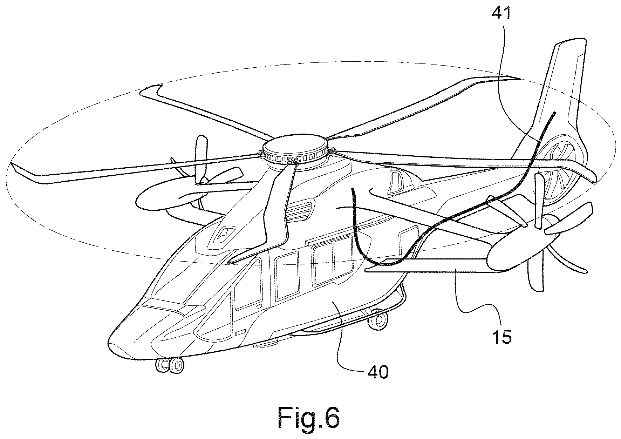

Selon un autre aspect et en référence à la figure 6, lorsqu'une branche électrique défectueuse 15 est identifiée et éventuellement en présence de fumée dans une zone contenant cette branche électrique défectueuse 15, le procédé peut comporter une étape d'affichage d'une représentation 41 de cette branche électrique défectueuse 15 sur une représentation 40 en trois dimensions du véhicule 1. Par exemple, un trait coloré matérialise la branche électrique défectueuse 15.

Selon un autre aspect et en référence à la figure 5, le procédé peut comporter une étape d'injection STP10 d'un gaz inerte ou inhibiteur dans un tube 50. Par exemple, en présence d'une branche électrique défectueuse 15 et de fumée identifiées dans une zone, la zone Z2 par exemple, le calculateur d'analyse 22 ou le calculateur de commande 29 transmet un signal au système 53 d'injection de gaz inerte ou inhibiteur pour injecter un gaz inerte ou inhibiteur dans un tube 50 présent dans ladite zone Z2 et logeant au moins partiellement la branche électrique défectueuse 15. Par exemple, mais non exclusivement, cette étape d'injection STP10 est réalisée à la suite de l'étape STP2 précitée.

Une étape de déclenchement d'extincteurs peut aussi être entreprise, automatiquement ou sur commande de l'équipage. Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la protection définie dans les revendications.

## Revendications

1. Procédé d'assistance pour assister un équipage en présence de fumée dans un véhicule de type aéronef (1), ledit véhicule (1) comportant ur réseau électrique (2) muni d'une pluralité de branches électriques (10), chaque branche électrique (10) comprenant une ligne électrique (11) alimentant électriquement au moins une charge électrique (13),
**caractérisé en ce que** le procédé comporte les étapes suivantes :
- détection de fumée (STP1) dans une zone du véhicule (1) avec un détecteur de fumée (21),
- transmission d'un signal de détection de fumée du détecteur de fumée (21) vers un calculateur d'analyse (22),
- identification (STP2) avec le calculateur d'analyse (22) d'au moins une branche électrique défectueuse (15) présente dans ladite zone parmi ladite pluralité de branches électriques (10),
- affichage (STP4) sur un afficheur (24) d'une proposition, à un équipage du véhicule et en présence de fumée dans ladite zone, de délestage de ladite au moins une branche électrique défectueuse (15) au moins lorsque ladite au moins une branche électrique défectueuse (15) comporte une charge électrique essentielle (27) pour la réalisation d'une mission courante du véhicule (1), et délestage automatique par une protection électrique (12) de ladite branche électrique défectueuse (15) comportant une charge électrique essentielle sur condition d'acceptation par ledit équipage à l'aide d'une interface homme-machine (26).

2. Procédé d'assistance selon la revendication 1,
**caractérisé en ce que** suite à ladite transmission d'un signal de détection de fumée, ledit procédé comporte une étape de transmission (STP1.1) d'un signal d'alerte du calculateur d'analyse (22) vers un alerteur (28) du véhicule (1) puis une étape (STP1.2) d'émission d'une alerte avec ledit alerteur (28).

3. Procédé d'assistance selon l'une quelconque des revendications 1 à 2,
**caractérisé en ce que** ladite étape d'identification d'au moins une branche électrique défectueuse (15) comporte une étape de sélection (STP2.1) parmi lesdites branches électriques (10) d'au moins une branche électrique suspecte présente dans ladite zone.

4. Procédé d'assistance selon l'une quelconque des revendications 1 à 3,
**caractérisé en ce que** ladite étape d'identification d'au moins une branche électrique défectueuse (15) comporte les étapes suivantes :
- mesure (STP2.2) d'au moins une donnée courante électrique d'au moins une branche électrique présente dans ladite zone,
- comparaison (STP2.3) par ledit calculateur d'analyse (22) de ladite au moins une donnée courante avec une donnée mémorisée correspondante,
- détermination (STP2.4) qu'une branche électrique (10) est une dite branche électrique défectueuse (15) sous condition de la comparaison.

5. Procédé d'assistance selon la revendication 4,
**caractérisé en ce que** ladite donnée courante est une résistance électrique ou une intensité de courant électrique ou une tension électrique ou une mesure d'isolation électrique.

6. Procédé d'assistance selon l'une quelconque des revendications 4 à 5,
**caractérisé en ce que** ladite comparaison par ledit calculateur d'analyse (22) de ladite au moins une donnée courante avec une donnée mémorisée correspondante comporte les sous-étapes suivantes : détermination d'un écart entre la donnée courante et la donnée mémorisée correspondante d'une branche électrique (10) puis détermination que ledit écart est conforme à un écart mémorisé, cette branche électrique étant une dite branche électrique défectueuse lorsque ledit écart n'est pas conforme à l'écart mémorisé.

7. Procédé d'assistance selon l'une quelconque des revendications 1 à 6,
**caractérisé en ce que** ledit procédé comporte une étape d'identification (STP3) d'un risque de délestage élevé ou faible de ladite au moins une branche électrique défectueuse (15), un risque de délestage faible d'une branche électrique défectueuse (15) étant identifié lorsque cette branche électrique défectueuse (15) ne comporte aucune charge électrique essentielle (27), un risque de délestage élevé d'une branche électrique défectueuse (15) étant identifié lorsque cette branche électrique défectueuse (15) comporte au moins une charge électrique essentielle (27) .

8. Procédé d'assistance selon la revendication 7,
**caractérisé en ce que** ledit procédé comporte une étape de délestage automatique (STP5) sans consultation dudit équipage d'une dite branche électrique défectueuse (15) associée à un dit risque de délestage faible.

9. Procédé d'assistance selon l'une quelconque des revendications 7 à 8,
**caractérisé en ce que** si une branche électrique défectueuse (15) présente un risque de délestage élevé, ledit procédé comporte, préalablement à ladite étape d'affichage sur un afficheur (24) d'une proposition, une étape d'affichage (STP3.5) d'une alerte dans une liste d'alerte.

10. Procédé d'assistance selon l'une quelconque des revendications 7 à 9,
**caractérisé en ce que** ledit procédé comporte une identification de la mission en cours, ledit risque de délestage étant fonction de ladite mission.

11. Procédé d'assistance selon l'une quelconque des revendications 1 à 10,
**caractérisé en ce que** le procédé comporte une étape d'affichage d'une représentation (41) de ladite au moins une branche électrique défectueuse (15) sur une représentation (40) en trois dimensions dudit véhicule (1).

12. Procédé d'assistance selon l'une quelconque des revendications 1 à 11,
**caractérisé en ce que** ledit procédé comporte une étape d'injection (STP10) d'un gaz inerte ou inhibiteur dans un tube (50) dans lequel chemine ladite ligne électrique (11) d'une branche électrique défectueuse (15).

13. Véhicule de type aéronef (1) comportant un réseau électrique (2) muni d'une pluralité de branches électriques (10), chaque branche électrique (10) comprenant une ligne électrique (11) alimentant électriquement au moins une charge électrique (13),
**caractérisé en ce que** ledit véhicule (1) comporte au moins un détecteur de fumée (21) agencé dans une zone (Z1, Z2, Z3, Z4, Z5, Z6) du véhicule (1), ledit véhicule (1) comportant un calculateur d'analyse (22) en communication avec ledit au moins un détecteur de fumée (21) ainsi qu'avec un afficheur (24) et une interface homme-machine (26) qui sont configurés pour appliquer le procédé selon l'une quelconque des revendications 1 à 12, ladite pluralité de branches électriques (10) comportant une pluralité de protections électriques commandables (12).

14. Véhicule selon la revendication 13,
**caractérisé en ce que** ledit véhicule (1) comporte un calculateur de commande (29) relié à ladite pluralité de protections électriques commandables (12) et au calculateur d'analyse (22).

15. Véhicule selon l'une quelconque des revendications 13 à 14, **caractérisé en ce que** ledit véhicule (1) comporte au moins un tube (50) dans lequel circule au moins une dite ligne électrique (11), ledit tube (50) étant relié à un système (53) d'injection d'un gaz inerte ou inhibiteur.

## Patentansprüche

1. Assistenzverfahren zum Unterstützen einer Besatzung bei Vorhandensein von Rauch in einem luftfahrzeugartigen Fahrzeug (1), wobei das Fahrzeug (1) ein elektrisches Netz (2) mit einer Mehrzahl von elektrischen Zweigen (10) aufweist, wobei jeder elektrische Zweig (10) eine elektrische Leitung (11) umfasst, die mindestens eine elektrische Last (13) elektrisch versorgt,
**dadurch gekennzeichnet, dass** das Verfahren die folgenden Schritte umfasst:
- Erfassen von Rauch (STP1) in einem Bereich des Fahrzeugs (1) mit einem Rauchmelder (21),
- Übertragen eines Raucherfassungssignals vom Rauchmelder (21) zu einem Auswerterechner (22),
- Identifizieren (STP2) von mindestens einem defekten elektrischen Zweig (15) aus der Mehrzahl von elektrischen Zweigen (10), der in diesem Bereich vorhanden ist, mit dem Analyserechner (22),
- Anzeigen (STP4), auf einer Anzeige (24), eines Vorschlags an eine Fahrzeugbesatzung und bei Vorhandensein von Rauch in dem Bereich, den mindestens einen defekten elektrischen Zweig (15) zumindest dann zu entlasten, wenn der mindestens eine defekte elektrische Zweig (15) eine für die Durchführung einer laufenden Aufgabe des Fahrzeugs (1) essentielle elektrische Last (27) aufweist, und automatisches Entlasten, durch eine elektrischen Schutzeinrichtung (12), des eine essentielle elektrische Last aufweisenden defekten elektrischen Zweigs (15) unter der Bedingung der Annahme durch die Besatzung über eine Mensch-Maschine-Schnittstelle (26).

2. Assistenzverfahren nach Anspruch 1,
**dadurch gekennzeichnet, dass** das Verfahren im Anschluss an das Übertragen eines Raucherfassungssignals einen Schritt des Übertragens (STP1.1) eines Warnsignals vom Analyserechner (22) an einen Alarmgeber (28) des Fahrzeugs (1) und anschließend einen Schritt (STP1.2) des Ausgebens einer Warnung mit dem Alarmgeber (28) umfasst.

3. Assistenzverfahren nach einem der Ansprüche 1 bis 2,
**dadurch gekennzeichnet, dass** der Schritt des Identifizierens von mindestens einem defekten elektrischen Zweig (15) einen Schritt des Auswählens (STP2.1) von mindestens einem in diesem Bereich vorhandenen verdächtigen elektrischen Zweig unter den elektrischen Zweigen (10) umfasst.

4. Assistenzverfahren nach einem der Ansprüche 1 bis 3,
**dadurch gekennzeichnet, dass** der Schritt des Identifizierens von mindestens einem defekten elektrischen Zweig (15) die folgenden Schritte umfasst:
- Messen (STP2.2) von mindestens einem elektrischen Stromdatenwert von mindestens einem in diesem Bereich vorhandenen elektrischen Zweig,
- Vergleichen (STP2.3) des mindestens einen aktuellen Stromdatenwerts mit einem entsprechenden gespeicherten Datenwert durch den Analyserechner (22),
- Bestimmen (STP2.4), dass ein elektrischer Zweig (10) ein besagter defekter elektrischer Zweig (15) ist, anhand des Vergleichs.

5. Assistenzverfahren nach Anspruch 4,
**dadurch gekennzeichnet, dass** der aktuelle Datenwert ein elektrischer Widerstand oder eine elektrische Stromstärke oder eine elektrische Spannung oder ein Maß für die elektrische Isolierung ist.

6. Assistenzverfahren nach einem der Ansprüche 4 bis 5,
**dadurch gekennzeichnet, dass** der Vergleich von mindestens einem aktuellen Datenwert mit einem entsprechenden gespeicherten Datenwert durch den Analyserechner (22) die folgenden Teilschritte umfasst: Bestimmen einer Abweichung zwischen dem aktuellen Datenwert und dem entsprechenden gespeicherten Datenwert eines elektrischen Zweigs (10) und dann Bestimmen, dass die Abweichung mit einer gespeicherten Abweichung übereinstimmt, wobei dieser elektrische Zweig ein besagter defekter elektrischer Zweig ist, wenn die Abweichung nicht mit der gespeicherten Abweichung übereinstimmt.

7. Assistenzverfahren nach einem der Ansprüche 1 bis 6,
**dadurch gekennzeichnet, dass** das Verfahren einen Schritt des Identifizierens (STP3) eines hohen oder niedrigen Entlastungsrisikos des mindestens einen defekten elektrischen Zweigs (15) umfasst, wobei ein niedriges Entlastungsrisiko eines defekten elektrischen Zweigs (15) identifiziert wird, wenn dieser defekte elektrische Zweig (15) keine essentielle elektrische Last (27) umfasst, und ein hohes Entlastungsrisiko eines defekten elektrischen Zweigs (15) identifiziert wird, wenn dieser defekte elektrische Zweig (15) mindestens eine essentielle elektrische Last (27) umfasst.

8. Assistenzverfahren nach Anspruch 7,
**dadurch gekennzeichnet, dass** das Verfahren einen Schritt des automatischen Entlastens (STP5) ohne Rücksprache mit der Besatzung bei einem defekten elektrischen Zweig (15) umfasst, der mit einem niedrigen Entlastungsrisiko verbunden ist.

9. Assistenzverfahren nach einem der Ansprüche 7 bis 8,
**dadurch gekennzeichnet, dass**, wenn ein defekter elektrischer Zweig (15) ein hohes Entlastungsrisiko aufweist, das Verfahren vor dem Schritt des Anzeigens eines Vorschlags auf einer Anzeige (24) einen Schritt des Anzeigens (STP3.5) eines Warnhinweises in einer Warnhinweisliste umfasst.

10. Assistenzverfahren nach einem der Ansprüche 7 bis 9,
**dadurch gekennzeichnet, dass** das Verfahren ein Identifizieren der aktuellen Mission umfasst, wobei das Entlastungsrisiko von der Mission abhängig ist.

11. Assistenzverfahren nach einem der Ansprüche 1 bis 10,
**dadurch gekennzeichnet, dass** das Verfahren einen Schritt des Anzeigens einer Darstellung (41) des mindestens einen defekten elektrischen Zweigs (15) auf einer dreidimensionalen Darstellung (40) des Fahrzeugs (1) umfasst.

12. Assistenzverfahren nach einem der Ansprüche 1 bis 11,
**dadurch gekennzeichnet, dass** das Verfahren einen Schritt des Einspeisens (STP10) eines inerten oder hemmenden Gases in ein Rohr (50) umfasst, in dem die elektrische Leitung (11) eines defekten elektrischen Zweiges (15) verläuft.

13. Luftfahrzeugartiges Fahrzeug (1) mit einem elektrischen Netz (2) mit einer Mehrzahl von elektrischen Zweigen (10), wobei jeder elektrische Zweig (10) eine elektrische Leitung (11) umfasst, die mindestens eine elektrische Last (13) elektrisch versorgt,
**dadurch gekennzeichnet, dass** das Fahrzeug (1) mindestens einen Rauchmelder (21) aufweist, der in einem Bereich (Z1, Z2, Z3, Z4, Z5, Z6) des Fahrzeugs (1) angeordnet ist, das Fahrzeug (1) einen Analyserechner (22) umfasst, der mit dem mindestens einen Rauchmelder (21) sowie mit einer Anzeige (24) und einer Mensch-Maschine-Schnittstelle (26) in Verbindung steht, die konfiguriert sind, um das Verfahren nach einem der Ansprüche 1 bis 12 auszuführen, wobei die Mehrzahl von elektrischen Zweigen (10) eine Mehrzahl von steuerbaren elektrischen Schutzeinrichtungen (12) umfasst.

14. Fahrzeug nach Anspruch 13,
**dadurch gekennzeichnet, dass** das Fahrzeug (1) einen Steuerrechner (29) aufweist, der mit der Mehrzahl von steuerbaren elektrischen Schutzeinrichtungen (12) und dem Analyserechner (22) verbunden ist.

15. Fahrzeug nach einem der Ansprüche 13 bis 14,
**dadurch gekennzeichnet, dass** das Fahrzeug (1) mindestens ein Rohr (50) umfasst, in dem mindestens eine der elektrischen Leitungen (11) verläuft, wobei das Rohr (50) mit einem System (53) zum Einspeisen eines inerten oder hemmenden Gases verbunden ist.

## Claims

1. Assistance method for assisting a crew when smoke is present in an aircraft type vehicle (1), said vehicle (1) comprising an electrical network (2) provided with a plurality of electrical branches (10), each electrical branch (10) comprising an electrical line (11) electrically powering at least one electrical load (13),
**characterized in that** the method comprises the following steps:
- detecting smoke (STP1) in a zone of the vehicle (1) using a smoke detector (21);
- transmitting a smoke detection signal from the smoke detector (21) to an analysis computer (22);
- identifying (STP2), using the analysis computer (22), at least one defective electrical branch (15) present in said zone from among said plurality of electrical branches (10);
- displaying (STP4), on a display (24) and when smoke is present in said zone, a proposal for a crew of the vehicle to load-shed said at least one defective electrical branch (15) at least when said at least one defective electrical branch (15) comprises an essential electrical load (27) for carrying out a current mission of the vehicle (1), and to automatically load-shed said defective electrical branch (15) comprising an essential electrical load using a circuit breaker (12), contingent upon acceptance by said crew by means of a human-machine interface (26).

2. Assistance method according to Claim 1,
**characterized in that**, following said transmission of a smoke detection signal, said method comprises a step of transmitting (STP1.1) a warning signal from the analysis computer (22) to a warning device (28) of the vehicle (1), then a step (STP1.2) of issuing a warning using said warning device (28).

3. Assistance method according to any one of Claims 1 to 2,
**characterized in that** said step of identifying at least one defective electrical branch (15) comprises a step of selecting (STP2.1) at least one suspected electrical branch present in said zone from among said electrical branches (10).

4. Assistance method according to any one of claims 1 to 3,
**characterized in that** said step of identifying at least one defective electrical branch (15) comprises the following steps:
- measuring (STP2.2) at least one current electrical data item of at least one electrical branch present in said zone;
- comparing (STP2.3) by said analysis computer (22) said at least one current data item with a corresponding stored data item;
- determining (STP2.4) that an electrical branch (10) is a said defective electrical branch (15) depending on the comparison.

5. Assistance method according to Claim 4,
**characterized in that** said current data item is an electrical resistance or an electrical current intensity or an electrical voltage or an electrical isolation measurement.

6. Assistance method according to any one of Claims 4 to 5, **characterized in that** said comparison by said analysis computer (22) of said at least one current data item with a corresponding stored data item comprises the following sub-steps: determining a deviation between the current data item and the corresponding stored data item of an electrical branch (10), then determining that said deviation complies with a stored deviation, this electrical branch being a said defective electrical branch when said deviation does not comply with the stored deviation.

7. Assistance method according to any one of Claims 1 to 6,
**characterized in that** said method comprises a step of identifying (STP3) a risk of high or low load-shedding of said at least one defective electrical branch (15), a low risk of load-shedding a defective electrical branch (15) being identified when this defective electrical branch (15) does not comprise any essential electrical load (27), a high risk of load-shedding a defective electrical branch (15) being identified when this defective electrical branch (15) comprises at least one essential electrical load (27).

8. Assistance method according to Claim 7,
**characterized in that** said method comprises a step of automatically load-shedding (STP5) a defective electrical branch (15) associated with a said low load-shedding risk without consulting said crew.

9. Assistance method according to any one of Claims 7 to 8,
**characterized in that**, if a defective electrical branch (15) has a high risk of load-shedding, said method comprises, prior to said step of displaying a proposal on a display (24), a step of displaying (STP3.5) a warning in a warning list.

10. Assistance method according to any one of Claims 7 to 9,
**characterized in that** said method comprises identifying the current mission, said risk of load-shedding being a function of said mission.

11. Assistance method according to any one of Claims 1 to 10,
**characterized in that** the method comprises a step of displaying a representation (41) of said at least one defective electrical branch (15) on a three-dimensional representation (40) of said vehicle (1).

12. Assistance method according to any one of Claims 1 to 11,
**characterized in that** said method comprises a step of injecting (STP10) an inert or inhibiting gas into a tube (50), in which said electrical line (11) of a defective electrical branch (15) runs.

13. Aircraft type vehicle (1) comprising an electrical network (2) provided with a plurality of electrical branches (10), each electrical branch (10) comprising an electrical line (11) electrically powering at least one electrical load (13), **characterized in that** said vehicle (1) comprises at least one smoke detector (21) arranged in a zone (Z1, Z2, Z3, Z4, Z5, Z6) of the vehicle (1), said vehicle (1) comprising an analysis computer (22) communicating with said at least one smoke detector (21), as well as with a display (24) and a human-machine interface (26), which are configured to apply the method according to any one of Claims 1 to 12, said plurality of electrical branches (10) comprising a plurality of controllable circuit breakers (12).

14. Vehicle according to Claim 13,
**characterized in that** said vehicle (1) comprises a control computer (29) connected to said plurality of controllable circuit breakers (12) and to the analysis computer (22).

15. Vehicle according to any one of Claims 13 to 14,
**characterized in that** said vehicle (1) comprises at least one tube (50), in which at least one said electrical line (11) circulates, said tube (50) being connected to a system (53) for injecting an inert or inhibiting gas.
